# EUROPÄISCHE PATENTANMELDUNG

(11) **EP 1 785 607 A1**
(43) Veröffentlichungstag der Anmeldung: **16.05.2007**
(21) Anmeldenummer: 06022032.4
(22) Anmeldetag: 20.10.2006
(51) Int. Cl.: F01N 3/20

(54) **Abgasanlage für eine Brennkraftmaschine**

(30) Priorität: 11.11.2005 DE 102005053901
(71) Anmelder: Bayerische Motoren Werke Aktiengesellschaft, 80809 München (DE)
(72) Erfinder: Witt, Andreas, Dr., 80995 München (DE)

(57) **Zusammenfassung**

Es wird eine Abgasanlage für eine Brennkraftmaschine vorgeschlagen, die zumindest im Teillastbereich im überstöchiometrischen Betrieb betreibbar ist, mit einer ersten motornah angeordneten Abgasreinigungsanlage (7) sowie einer stromabwärts der ersten Abgasreinigungsanlage (7) motorfern angeordneten, stets durchströmten zweiten Abgasreinigungsanlage (9) und einem Stellelement (6) zur Leitung des Abgases durch die erste (7) und/oder zweite (9) Abgasreinigungsanlage, mit einer dritten Abgasreinigungsanlage (8; 10) stromabwärts der ersten (7) oder zweiten (9) Abgasreinigungsanlage, wobei die dritte Abgasreinigungsanlage (8; 10) zur Stickoxidkonvertierung vorgesehen ist.

## Beschreibung

Die vorliegende Erfindung betrifft eine Abgasanlage für eine Brennkraftmaschine, die zumindest im Teillastbereich im überstöchiometrischen Betrieb betreibbar ist, mit einer ersten motornah angeordneten Abgasreinigungsanlage sowie einer stromabwärts der ersten Abgasreinigungsanlage motorfern angeordneten, stets durchströmten zweiten Abgasreinigungsanlage und einem Stellelement zur Leitung des Abgases durch die erste und/oder zweite Abgasreinigungsanlage.

Anhand der DE 4412 742 A1 ist ein Katalysatorsystem bekannt geworden, welches einen Vorkatalysator und einen Hauptkatalysator besitzt und bei dem vor dem Vorkatalysator ein Stellelement in der Form eines Bypassventils vorgesehen ist, sodass bei einer offenen Stellung des Bypassventils das Abgas der Brennkraftmaschine zum schnellen Aufheizen des Vorkatalysators durch den Vorkatalysator geleitet wird und anschließend in den Hauptkatalysator eintreten kann. Um nun dem Vorkatalysator vor einer thermischen Beschädigung zu schützen, kann das Bypassventil geschlossen werden und gleichzeitig ein am Auslasstrakt der Brennkraftmaschine vorgesehenes zweites Bypassventil geöffnet werden, welches das Abgas dann nur noch durch den Hauptkatalysator leitet.

Ein solches Katalysatorsystem ist vorwiegend für die Anordnung an einer homogen betriebenen Brennkraftmaschine vorgesehen.

Anhand der Veröffentlichung 11. Aachener Kolloquium 2002, S. 35ff ist ein Abgassystem bekannt geworden für ein Kraftfahrzeug mit einer Brennkraftmaschine, die im überstöchiometrischen Betrieb betrieben werden kann. Die Abgasanlage dieser Brennkraftmaschine weist eine motornah angeordnete Abgasreinigungsanlage auf und eine zweite motorfern angeordnete Abgasreinigungsanlage in der Form eines NOx Speicherkatalysators. Da der Speicherkatalysator nur innerhalb eines eng begrenzten Temperaturfensters von etwa 200 Grad Celsius bis 450 Grad Celsius wirkt und ab einem Temperaturbereich von etwa 700 Grad Celsius eine thermische Beschädigung des Speicherkatalysators zu befürchten ist, ist in dieser Abgasanlage stromabwärts der motornah angeordneten Abgasreinigungsanlage eine Abgasklappe vorgesehen, die so geschaltet werden kann, dass bei zu hohen Temperaturen das Abgas nicht direkt in den Speicherkatalysator eintritt, sondern zunächst über eine Kühlleitung geführt wird, die für eine entsprechende Absenkung der Abgastemperatur sorgt. Um nun den Platzbedarf für diese Kühlleitung zu schaffen, musste der Unterboden des Kraftfahrzeugs entsprechend verändert werden. Auch ist ein aufwändiges Abgastemperatur Management erforderlich, um dafür zu sorgen, dass der Speicherkatalysator thermisch nicht beschädigt wird. Zu diesem Zweck ist am Eingang des Speicherkatalysators ein Temperatursensor angeordnet.

Wenn nun ein solcher Speicherkatalysator - wie im vorstehend geschilderten Fall - motorfern angeordnet wird, dann sind zum Erreichen der Arbeitstemperatur des Speicherkatalysators für den Wirkungsgrad schädliche Maßnahmen zur Temperaturerhöhung erforderlich, wenn die Brennkraftmaschine mit niedriger Drehzahl und niedriger Last arbeitet, also beispielsweise Drosselungsmaßnahmen, um einen geringeren Luftüberschuss zu erreichen oder füllungsreduzierende Ventilsteuerzeiten. Wenn die Brennkraftmaschine mit höherer Last und höherer Drehzahl im oberen Schichtladebereich betrieben wird, ist das Abgas bereits so heiß, dass die obere Temperaturgrenze des Speicherkatalysators überschritten wird und somit keine hinreichende NOx-Konvertierung mehr stattfindet. Infolgedessen wird der Schichtladebereich begrenzt und die Brennkraftmaschine dann im homogenen Betrieb betrieben, was beides für den Benutzer des damit ausgestatteten Kraftfahrzeugs Verbrauchsnachteile nach sich zieht.

Ausgehend hiervon liegt der vorliegenden Erfindung nunmehr die Aufgabe zugrunde, eine Abgasanlage für eine Brennkraftmaschine zu schaffen, die zumindest im Teillastbereich im überstöchiometrischen Betrieb betrieben werden kann, mit der Schichtladebereich erweitert werden kann, ohne dass dafür Wirkungsgrad verschlechternde Maßnahmen zur Beeinflussung der Abgastemperatur notwendig sind.

Die Erfindung schafft nun zur Lösung dieser Aufgabe eine Abgasanlage mit den Merkmalen des Anspruchs 1. Vorteilhafte Ausgestaltungen hiervon sind in den weiteren Ansprüchen beschrieben.

Die Erfindung sieht eine Abgasanlage für eine Brennkraftmaschine vor, die zumindest im Teillastbereich im überstöchiometrischen Betrieb betreibbar ist, mit einer ersten motornah angeordneten Abgasreinigungsanlage sowie einer stromabwärts der ersten Abgasreinigungsanlage motorfern angeordneten, stets durchströmten zweiten Abgasreinigungsanlage und einem Stellelement zur Leitung des Abgases durch die erste und/oder zweite Abgasreinigungsanlage, wobei nach der Erfindung eine dritte Abgasreinigungsanlage stromabwärts der ersten oder zweiten Abgasreinigungsanlage vorgesehen ist und die dritte Abgasreinigungsanlage zur Stickoxidkonvertierung vorgesehen ist. Mit der dritten Abgasreinigungsanlage können die im Abgas vorhandenen Stickoxide kontinuierlich oder diskontinuierlich konvertiert werden, d. h. also die dritte Abgasreinigungsanlage kann im kontinuierlichen Betrieb Stickoxid konvertieren oder dies diskontinuierlich durchführen, d. h. also die im Abgas der Brennkraftmaschine vorhandenen Stickoxide zunächst speichern und nach dem Erreichen der Speicherkapazität diskontinuierlich konvertieren, beispielsweise im dann stöchiometrischen Betrieb der Brennkraftmaschine oder im Betrieb mit Kraftstoffüberschuss.

Die zweite Abgasreinigungsanlage wird also stets durchströmt, unabhängig davon, ob das in der Abgasanlage vorgesehene Stellelement das Abgas zunächst durch die erste Abgasreinigungsanlage in der Form beispielsweise eines Vorkatalysators führt, oder direkt in die zweite Abgasreinigungsanlage, beispielsweise einen am Fahrzeugunterboden vorgesehenen Hauptkatalysator unter Umgehung des Vorkatalysators. Nach der Erfindung ist es nunmehr vorgesehen, dass die dritte Abgasreinigungsanlage stromabwärts der ersten oder der zweiten Abgasreinigungsanlage angeordnet ist und der vorstehend beschriebenen Stickoxidkonvertierung dient. Die Anordnung der dritten Abgasreinigungsanlage stromabwärts der ersten oder der zweiten Abgasreinigungsanlage kann dabei beispielsweise in Abhängigkeit von den hauptsächlich zu erwartenden Betriebsbedingungen der Brennkraftmaschine gewählt werden, ob sich diese also hauptsächlich im Betriebsbereich niedriger Last und niedriger Drehzahl befindet oder hoher Last und hoher Drehzahl und dabei noch im Schichtladebetrieb betrieben wird.

Nach einer bevorzugten Ausführungsform gemäß der vorliegenden Erfindung weist die Abgasanlage eine zur Stickoxidkonvertierung vorgesehene vierte Abgasreinigungsanlage auf, wobei die Anordnung so gewählt ist, dass die zweite Abgasreinigungsanlage zwischen der dritten und der vierten Abgasreinigungsanlage angeordnet ist.

Damit wird erreicht, dass unabhängig von den hauptsächlich zu erwartenden Betriebsbedingungen der Brennkraftmaschine das Abgas immer durch eine Abgasreinigungsanlage zur Stickoxidkonvertierung - die kontinuierlich oder diskontinuierlich arbeiten kann - geleitet wird und mittels des Stellelements der Abgasstrom aus der Brennkraftmaschine durch die erste Abgasreinigungsanlage und eine stromabwärts davon angeordnete Abgasreinigungsanlage zur Stickoxidkonvertierung geführt wird oder das Abgas durch das Stellelement beispielsweise unter Umgehung der ersten Abgasreinigungsanlage direkt in die zweite Abgasreinigungsanlage geführt wird und dann eine stromabwärts der zweiten Abgasreinigungsanlage angeordnete weitere Abgasreinigungsanlage zur Stickoxidkonvertierung durchströmt.

Das Stellelement ist daher in der Abgasanlage derart angeordnet, dass das Abgas durch mindestens eine Abgasreinigungsanlage zur Stickoxidkonvertierung geleitet wird, das Stellelement kann daher beispielsweise zwischen dem Abgastrakt der Brennkraftmaschine und vor der ersten Abgasreinigungsanlage angeordnet sein.

Das Stellelement kann dabei so ausgebildet sein, dass das Abgas bei einer niedrigeren ersten Abgastemperatur durch eine motornahe Abgasreinigungsanlage zur Stickoxidkonvertierung geleitet wird und bei einer höheren als der ersten Abgastemperatur durch eine motorferne Abgasreinigungsanlage zur Stickoxidkonvertierung geleitet wird.

Damit wird erreicht, dass den Kraftstoffverbrauch der Brennkraftmaschine erhöhende, wirkungsgradschädliche Drosselungsmaßnahmen nicht mehr erforderlich sind, dass über das Stellelement das Abgas bei niedriger Last und niedriger Drehzahl der Brennkraftmaschine durch die motornah angeordnete Abgasreinigungsanlage zur Stickoxidkonvertierung geleitet wird und dem gemäß die Brennkraftmaschine im Schichtladebereich mit hohem Luftüberschuss betrieben werden kann. Steigen nun Last und Drehzahl der Brennkraftmaschine an und damit auch die Abgastemperatur, dann kann der Schichtladebereich, d. h. also der Kennfeldbereich der Brennkraftmaschine, in dem diese noch mit Luftüberschuss und damit mager betrieben wird, in Richtung zu höheren Drehzahlen und höheren Lasten verschoben werden und das Abgas durch das Stellelement durch die motorferne Abgasreinigungsanlage zur Stickoxidkonvertierung geleitet werden, ohne dass besondere Kühlmaßnahmen entlang der Strecke, über die das Abgas geführt wird, notwendig werden.

Nach einer Weiterbildung der Erfindung ist es vorgesehen, dass die Abgasreinigungsanlage zur Stickoxidkonvertierung und die erste oder zweite Abgasreinigungsanlage in einem gemeinsamen Gehäuse angeordnet sind. Es kann daher die stromabwärts der ersten oder der zweiten Abgasreinigungsanlage vorgesehene dritte Abgasreinigungsanlage zur Stickoxidkonvertierung in einem gemeinsamen Gehäuse mit der ersten oder zweiten Abgasreinigungsanlage angeordnet werden. Auch ist es möglich, dass bei einer Ausführungsform der Abgasanlage mit einer vierten Abgasreinigungsanlage zur Stickoxidkonvertierung diese in einem gemeinsamen Gehäuse mit der ersten oder zweiten Abgasreinigungsanlage angeordnet ist.

Übliche Abgasanlagen für Brennkraftmaschinen besitzen zur Dämpfung der Verbrennungsgeräusche mindestens einen Schalldämpfer. Nach einer Weiterbildung der Erfindung ist es vorgesehen, dass die Abgasreinigungsanlage zur Stickoxidkonvertierung und ein Schalldämpfer in einem gemeinsamen Gehäuse angeordnet sind. Nach einer Ausführungsform gemäß der vorliegenden Erfindung kann daher beispielsweise die vierte Abgasreinigungsanlage zusammen mit einem Schalldämpfer sehr weit motorfern angebracht sein, beabstandet also zur Fahrzeugmitte in Richtung zum Fahrzeugheck verschoben und in einem gemeinsamen Gehäuse mit einem Schalldämpfer der Abgasanlage.

Schließlich ist nach der Erfindung auch noch eine Brennkraftmaschine vorgesehen, die zumindest im Teillastbereich im überstöchiometrischen Betrieb betrieben werden kann, die mindestens eine Abgasanlage aufweist, wie sie vorstehend beschrieben worden ist. Damit kann eine mehrzylindrige Brennkraftmaschine mit beispielsweise sechs oder acht Zylindern auch eine zweiflutige Abgasanlage aufweisen, die jeweils wie vorstehend geschildert ausgebildet ist.

Die Erfindung wird im Folgenden anhand der Zeichnung näher erläutert. Diese zeigt in:
Fig. 1 eine schematische Darstellung einer Sechszylinder-Brennkraftmaschine mit einer zweiflutigen Abgasanlage, bei der zunächst motornahe Abgasreinigungsanlagen durchströmt werden; und
Fig. 2 eine Darstellung ähnlich Fig. 1, bei der das Abgas vom Stellelement unter Umgehung der motornahen Abgasreinigungsanlagen zu den motorfern angeordneten Abgasreinigungsanlagen geführt wird.

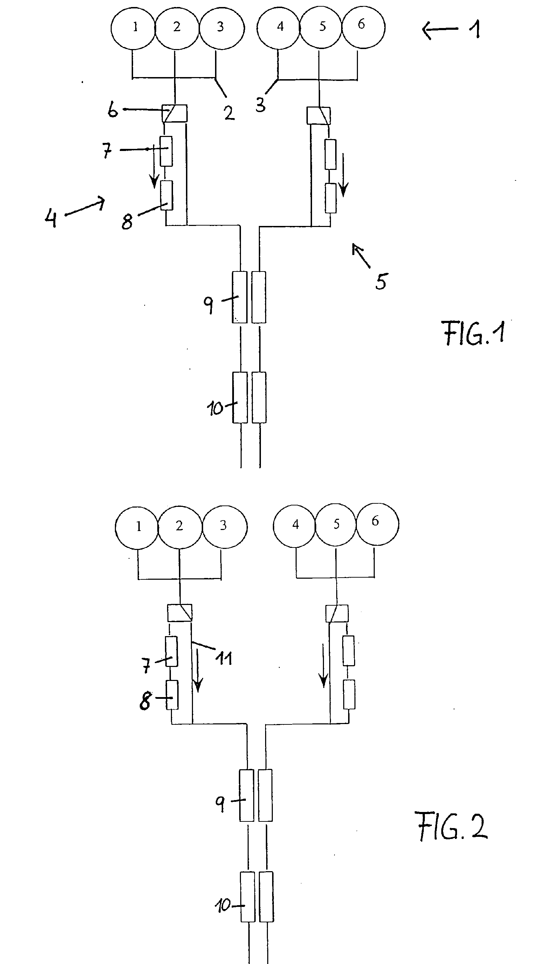

Fig. 1 der Zeichnung zeigt in einer schematischen Darstellung eine Brennkraftmaschine 1 mit sechs Zylindern. Jeder Zylinderbank ist ein Abgassammler 2, 3 nachgeordnet, der das Abgas zu einer jeweiligen Abgasanlage 4, 5 leitet.

Da die Abgasanlage 5 der insgesamt zweiflutig ausgebildeten Abgasanlage identisch ist mit der Abgasanlage 4, wird bei der nachfolgenden Beschreibung nur mehr auf die Abgasanlage 4 eingegangen.

Dem Abgassammler 2 stromabwärts nachgeschaltet ist ein Stellelement 6 in der Form einer Abgasklappe, über die das Abgas in die motornah angeordneten Abgasreinigungsanlagen und/oder motorfern angeordneten Abgasreinigungsanlagen geleitet werden kann.

Fig. 1 zeigt nun die Stellung der Abgasklappe 6, über die das Abgas aus dem Abgassammler 2 zur motornah angeordneten ersten Abgasreinigungsanlage, beispielsweise einem Vorkatalysator 7 geleitet wird, dem in Strömungsrichtung des Abgases stromabwärts eine motornah angeordnete dritte Abgasreinigungsanlage in der Form eines DeNOx-Katalysator 8 nachgeschaltet ist. Stromabwärts des DeNOx-Katalysators 8 ist ein Hauptkatalysator in der Form beispielsweise eines Drei-Wege-Katalysators 9 vorgesehen, dem stromabwärts eine vierte Abgasreinigungsanlage in der Form eines DeNOx-Katalysators 10 folgt.

Bei einer niedrigen ersten Abgastemperatur - die Brennkraftmaschine 1 wird im Schichtladebetrieb betrieben - leitet die Abgasklappe 6 das Abgas zu dem motornah angeordneten Vorkatalysator 7 und dem motornah angeordneten DeNOx-Katalysator 8. Danach strömt das Abgas weiter zum Hauptkatalysator 9 und dem zweiten DeNOx-Katalysator 10. Der Vorkatalysator 7 und der erste DeNOx-Katalysator 8 befinden sich so motornah angeordnet, dass beide Katalysatoren 7, 8 sehr schnell ihre Betriebstemperatur erreichen und der erste DeNOx-Katalysator 8 in seinem Arbeitstemperaturbereich von beispielsweise 200 Grad Celsius bis 450 Grad Celsius arbeitet und hierzu keine Wirkungsgrad verschlechternden Maßnahmen zur Abgastemperaturerhöhung notwendig sind.

Wird nun die Brennkraftmaschine 1 mit höherer Drehzahl und höherer Last betrieben, steigt also die Abgastemperatur an, so wird der Abgasstrom über das Stellelement 6 so umgeleitet, dass der Vorkatalysator 7 und der erste DeNOx-Katalysator 8 nicht mehr oder nur noch zur Aufrechterhaltung der Arbeitstemperatur durchströmt werden und das Abgas über eine Abgasleitung 11 unter zumindest teilweiser Umgehung der Katalysatoren 7, 8 zur zweiten Abgasreinigungsanlage, dem Hauptkatalysator 9 und der stromabwärts davon angeordneten vierten Abgasreinigungsanlage, dem zweiten DeNOx-Katalysator 10 geführt wird.

Diese Konfiguration ist in Fig. 2 der Zeichnung dargestellt. Durch die sehr motorferne Anordnung des zweiten DeNOx-Katalysators 10, beispielsweise in einem gemeinsamen Gehäuse mit einem nicht dargestellten Nachschalldämpfer wird es ermöglicht, den oberen Schichtladebereich der Brennkraftmaschine 1 in Richtung zu höheren Lasten und höheren Drehzahlen zu erweitern, ohne dass über eine wirkungsgradverschlechternde Anfettung des Gemisches der Verbrauch der Brennkraftmaschine erhöht wird.

Obwohl Fig. 1 und Fig. 2 der Zeichnung eine insgesamt zweiflutige Abgasanlage zeigen, ist es auch möglich, nur einen motorfern angeordneten zweiten DeNOx-Katalysator 10 vorzusehen und die Abgasstränge der beiden Abgasanlagen 4, 5 vor dem zweiten DeNOx-Katalysator 10 zu vereinigen.

Mit der Erfindung wird es nunmehr erreicht, dass im unteren Schichtlastbereich der Brennkraftmaschine durch Anströmung eines motornah angeordneten DeNOx-Katalysators auf wirkungsgrandverschlechternde Maßnahme zur Abgastemperaturerhöhung verzichtet werden kann. Darüber hinaus kann die obere Schichtlastgrenze durch Anströmung eines extrem motorfernen DeNOx-Katalysators im oberen Schichtlastbereich erweitert werden und somit ebenfalls ein Vorteil in Richtung Verringerung des Brennstoffverbrauchs der Brennkraftmaschine erreicht werden.

### Bezugszeichenliste

- 1: Brennkraftmaschine
- 2: Abgassammler
- 3: Abgassammler
- 4: Abgasanlage
- 5: Abgasanlage
- 6: Stellelement, Abgasklappe
- 7: Vorkatalysator
- 8: DeNOx-Katalysator
- 9: Hauptkatalysator
- 10: DeNOx-Katalysator
- 11: Abgasleitung

## Patentansprüche

1. Abgasanlage für eine Brennkraftmaschine, die zumindest im Teillastbereich im überstöchiometrischen Betrieb betreibbar ist, mit einer ersten motornah angeordneten Abgasreinigungsanlage (7) sowie einer stromabwärts der ersten Abgasreinigungsanlage (7) motorfern angeordneten, stets durchströmten zweiten Abgasreinigungsanlage (9) und einem Stellelement (6) zur Leitung des Abgases durch die erste (7) und/oder zweite (9) Abgasreinigungsanlage, **gekennzeichnet durch** eine dritte Abgasreinigungsanlage (8; 10) stromabwärts der ersten (7) oder zweiten (9) Abgasreinigungsanlage, wobei die dritte Abgasreinigungsanlage (8; 10) zur Stickoxidkonvertierung vorgesehen ist.

2. Abgasanlage für eine Brennkraftmaschine nach Anspruch 1, **gekennzeichnet durch** eine zur Stickoxidkonvertierung vorgesehene vierte Abgasreinigungsanlage (8; 10), wobei die zweite Abgasreinigungsanlage (9) zwischen der dritten (8; 10) und der vierten (8; 10) Abgasreinigungsanlage angeordnet ist.

3. Abgasanlage nach Anspruch 1 oder 2, **dadurch gekennzeichnet, dass** das Stellelement (6) derart angeordnet ist, dass das Abgas durch mindestens eine Abgasreinigungsanlage (8; 10) zur Stickoxidkonvertierung geleitet ist.

4. Abgasanlage nach einem der Ansprüche 2 oder 3, **dadurch gekennzeichnet, dass** das Stellelement (6) derart ausgebildet ist, dass das Abgas bei einer niedrigeren ersten Abgastemperatur durch eine motornahe Abgasreinigungsanlage (8) zur Stickoxidkonvertierung geleitet ist und bei einer höheren als die erste Abgastemperatur durch eine motorferne Abgasreinigungsanlage (10) zur Stickoxidkonvertierung geleitet ist.

5. Abgasanlage nach einem der vorstehenden Ansprüche, **dadurch gekennzeichnet, dass** die Abgasreinigungsanlage (8; 10) zur Stickoxidkonvertierung und die erste (7) oder zweite (9) Abgasreinigungsanlage in einem gemeinsamen Gehäuse angeordnet sind.

6. Abgasanlage nach einem der vorstehenden Ansprüche, **dadurch gekennzeichnet, dass** die Abgasreinigungsanlage (8; 10) zur Stickoxidkonvertierung und ein Schalldämpfer in einem gemeinsamen Gehäuse angeordnet sind.

7. Brennkraftmaschine, die zumindest im Teillastbereich im überstöchiometrischen Betrieb betreibbar ist, **gekennzeichnet durch** mindestens eine Abgasanlage nach einem der vorstehenden Ansprüche.
